# EUROPÄISCHE PATENTSCHRIFT

(11) **EP 2 571 000 B1**
(45) Veröffentlichungstag und Bekanntmachung des Hinweises auf die Patenterteilung: **08.11.2017**
(21) Anmeldenummer: 12184880.8
(22) Anmeldetag: 18.09.2012
(51) Int. Cl.: G08B 13/14

(54) **Verfahren und Vorrichtung zur Erkennung mechanischer Einwirkungen auf elektrische Anlagen**
Method and device for detecting mechanical impact on electrical installations
Procédé et dispositif de détection d'actions mécaniques sur des installations électriques

(30) Priorität: 19.09.2011 DE 102011082940
(43) Veröffentlichungstag der Anmeldung: 20.03.2013
(73) Patentinhaber: Bender GmbH & Co. KG, 35305 Grünberg (DE)
(72) Erfinder: Pieler, Dirk, Dr., 35305 Grünberg (DE)
(74) Vertreter: advotec.

(56) Entgegenhaltungen:
- WO-A1-2008/046370
- DE-A1- 10 161 480
- JP-A- 2010 153 494
- US-A1- 2010 085 670

## Beschreibung

Die Erfindung betrifft ein Verfahren und eine Vorrichtung zur Erkennung mechanischer Einwirkungen auf elektrische Anlagen, die eine funktionsgemäße elektrische Verbindung mit einem Stromversorgungsnetz oder einem Speichermedium aufweisen, wobei zur Erkennung der mechanischen Einwirkung mindestens ein Signal auf der funktionsgemäßen elektrischen Verbindung erfasst wird.

Weiterhin betrifft die Erfindung eine Photovoltaikanlage mit wenigstens einem Solarstrommodul und mit einer erfindungsgemäßen Vorrichtung.

Anlagen mit elektrischen Betriebsmitteln zur Erzeugung, Übertragung, Umwandlung, Verteilung und Anwendung elektrischer Energie werden vielfach auf Freigeländen errichtet. So sind z.B. Solarstrommodule von Photovoltaikanlagen notwendigerweise auf Dächern und Freiflächen installiert. Auch befinden sich mit einer elektrischen Anlage verbundene ortsfeste, aber bewegliche elektrische Betriebsmittel wie Maschinen oder mobile Generatoren oft im Freien. Dort sind diese Anlagenteile mechanischen Einwirkungen ausgesetzt, die ihre Ursache beispielsweise in einem umstürzenden Baum bei einem Unwetter oder auf Baustellen in der Kollision mit einem Baufahrzeug haben können. Da die elektrischen Anlagen oft einen erheblichen Wert darstellen, sind sie zudem diebstahlgefährdet.

Die Beschädigung oder gar die Entwendung eines Anlagenteils bedeuten aber stets Einschränkungen hinsichtlich der Verfügbarkeit, Versorgungssicherheit und Wirtschaftlichkeit der elektrischen Anlage. Der Anlagenbetreiber wird daher bestrebt sein, die elektrische Anlage so umfassend wie möglich vor nachteiligen mechanischen Einwirkungen zu schützen.

Die unbefugte räumliche Zugänglichkeit kann zwar durch Absperr- und Sicherungsanlagen weitgehend erschwert werden, ein umfassender Diebstahlschutz ist aber nur mit erheblichem Aufwand möglich.

Bekannt sind beispielsweise Sicherungsmaßnahmen für Photovoltaikanlagen, die neben einer erschwerten Zugänglichkeit durch herkömmliche Alarmvorrichtungen wie Bewegungsmelder und Videoüberwachung die Solarstrommodule mechanisch sichern und auf diese Weise deren Demontage zumindest erschweren.

Aus der US 2010/085670 A1 ist ein Überwachungssystem für eine Photovoltaik-Anlage bekannt, das es ermöglicht, fehlerhafte Anschlüsse bei der Installation sowie gefährdende Betriebszustände während des Betriebs der Anlage festzustellen. Das Überwachungssystem ist zur Diebstahlerkennung der Photovoltaik-Module geeignet, wobei elektrische Signale von Sensormodulen erfasst und anschließend ausgewertet werden.

In der DE 101 61 480 A1 ist ein Verfahren zum Betreiben einer Photovoltaikanlage mit einer Sicherung gegen unbefugte Manipulationen beschrieben. Dabei wird ein Messstrom in den Lastkreis der Photovoltaikanlage eingespeist, der einen geschlossenen Alarmkreis innerhalb der elektrischen Anlage bildet, wobei zur Erkennung der unbefugten Manipulation eine Spannung an den Außenanschlüssen der Anlage abgenommen und ausgewertet wird.

Die bekannten Sicherungsmaßnahmen erfordern aber oftmals erhebliche Eingriffe in die technische Ausgestaltung der Anlage und sind mit hohen Investitionen verbunden oder gewähren nur unzureichend Schutz gegen Entwendung.

Der vorliegenden Erfindung liegt somit die Aufgabe zu Grunde, ein Verfahren und eine Vorrichtung zur Erkennung mechanischer Einwirkungen auf elektrische Anlagen zu entwickeln, welche mit möglichst geringem technischen Aufwand in bestehende Anlageninstallationen integrierbar sind und eine permanente Überwachung ermöglichen.

Bezogen auf ein Verfahren wird diese Aufgabe in Verbindung mit dem Oberbegriff des Anspruchs 1 dadurch gelöst, dass eine Erdverbindung einer zur Ausführung des Verfahrens ausgebildeten Vorrichtung überwacht wird, wobei die Vorrichtung eine Erfassungseinrichtung aufweist, die zur Erfassung eines eingeprägten Messstroms als Signal für die Bestimmung des Ist-Wertes eines Isolationswiderstands ausgebildet ist.

Die Erfindung beruht auf dem Grundgedanken, dass eine bestehende funktionsgemäße elektrische Verbindung der zu überwachenden Anlage mit einem Stromversorgungsnetz oder einem Speichermedium wie z.B. einer Batterie oder einer Brennstoffzelle genutzt wird. Diese funktionsgemäße elektrische Verbindung ist im einfachsten Fall eine vorhandene Stromversorgungsleitung, über die ein elektrisches Betriebsmittel an das Stromversorgungsnetz oder eine separate Stromversorgung angeschlossen ist; beispielhaft sei hier die Zuleitung eines Elektromotors, eines mobilen Generators oder eines Solarstrommoduls genannt. Auf dieser funktionsgemäßen elektrischen Verbindung wird ein Signal, also der zeitliche Verlauf einer physikalischen Größe wie der elektrischen Spannung oder die Stromstärke erfasst und zur Erkennung einer mechanischen Einwirkung herangezogen. Im einfachsten Fall beruht der erfasste Signalverlauf auf der Betriebsspannung bzw. dem Betriebsstrom des Versorgungsnetzes. Es kann aber auch eine zusätzlich eingeprägte Größe sein, beispielsweise ein Messstrom einer ständigen Isolationsüberwachung in einem IT-Netz.

Erfindungsgemäß wird eine Erdverbindung einer zur Ausführung des Verfahrens ausgebildeten Vorrichtung überwacht. Wird beispielsweise in Verbindung mit einer Isolationsüberwachung als Signal der Messstrom eines Isolationsüberwachungsgerätes erfasst, so können zusätzlich die ordnungsgemäßen Anschlüsse, insbesondere die Erdleitung und die Eigenversorgung dieses Gerätes überwacht werden, um Manipulationen an der Überwachungsvorrichtung selbst zu erschweren. Insbesondere kann ein Abtrennen oder Lahmlegen des Gerätes und damit die Unterdrückung einer möglichen Alarmauslösung verhindert werden.

Ohne bauliche Veränderungen an der zu schützenden Anlage selbst wird ein vorhandenes Signal auf einer bereits bestehenden elektrischen Leitung zur Erkennung einer mechanischen Einwirkung genutzt.

In bevorzugter Ausgestaltung erfolgt die Erkennung der mechanischen Einwirkung durch Vergleich eines Ist-Wertes des erfassten Signals oder eines Ist-Wertes daraus abgeleiteter Größen mit einem Soll-Wert.

Eine mechanische Einwirkung auf das zu überwachende Anlagenteil wird erkannt, indem das momentan erfasste Signal als Ist-Wert mit einem voreingestellten oder gespeicherten Soll-Wert verglichen wird. Davon ausgehend, dass eine mechanische Einwirkung eine Änderung des Ist-Zustands des erfassten Signals zur Folge hat, kann somit eine Abweichung des Ist-Wertes von dem Soll-Wert auf eben diese mechanische Einwirkung hindeuten. Insbesondere bei der Erfassung zusätzlich eingeprägter Signale kann der erfasste zeitliche Verlauf des Ist-Wertes mit gespeicherten (Soll-Wert-) Verlaufsmustern verglichen werden, um mögliche außergewöhnliche Ereignisse erkennen zu können. In einem Zwischenschritt kann das erfasste Signal in eine abgeleitete Größe transformiert werden, beispielsweise kann ein erfasster Messstrom oder eine erfasste Messspannung bei bekanntem Messaufbau zunächst in einen Widerstandswert umgerechnet werden, der anschließend einem Vergleich unterzogen wird. Ein Anwendungsbeispiel hierfür ist die Auswertung des Isolationswiderstands einer elektrischen Anlage.

Vorteilhafterweise wird eine sprunghafte Änderung des Ist-Wertes als Erkennungskriterium für eine mechanische Einwirkung herangezogen. Durch Auswertung des zeitlichen Verlaufs des erfassten Ist-Wertes kann eine sprunghafte Änderung des Ist-Wertes einen Hinweis auf eine Trennung der elektrischen Verbindung und damit auf eine mögliche Beschädigung oder Demontage liefern.

In weiterer vorteilhafter Ausgestaltung wird eine Änderungsgeschwindigkeit des Ist-Wertes als Erkennungskriterium für eine mechanische Einwirkung herangezogen. In dieser Ausgestaltung wird in einem weiteren Schritt nach Erfassen des zeitlichen Verlaufs des Signals die Änderungsgeschwindigkeit des Ist-Wertes betrachtet. Insbesondere mit der Erfassung von zusätzlich eingeprägten Messsignalen, die einer natürlichen Schwankung unterliegen, ist diese Auswertung von Bedeutung.

Zweckmäßigerweise wird bei Erkennen einer mechanischen Einwirkung ein Alarmsignal erzeugt. Die Alarmauslösung kann abhängig von Aufbau und Lage der zu überwachenden elektrischen Anlage in herkömmlicher Weise mittels eines optischen und/oder akustischen Alarmsignals erfolgen.

Das Alarmsignal kann vorteilhafterweise fernübertragen werden. Diese elektronische Weiterleitung kann drahtlos über eine Funkverbindung oder leitungsgebunden an mehrere Empfangsstellen erfolgen.

Mit Vorteil wird eine permanente Selbstüberwachung des Verfahrens zur Erkennung mechanischer Einwirkungen ausgeführt. Damit kann verhindert werden, dass das Überwachungsverfahren selbst durch unbefugte Eingriffe deaktiviert oder manipuliert wird.

In weiteren vorteilhaften Ausgestaltungen des Verfahrens kann dieses in einem getakteten Betrieb gefahren werden oder nur temporär aktiviert werden. Durch diese Betriebsarten kann insbesondere bei Photovoltaikanlagen mit Isolationsüberwachung, d.h. bei Erfassung eines Messstroms, eine erhebliche Einsparung der notwendigen Versorgungsenergie erzielt werden.

Bezogen auf eine Vorrichtung wird die der Erfindung zu Grunde liegende Aufgabe in Verbindung mit dem Oberbegriff des Anspruchs 10 dadurch gelöst, dass die Erfassungseinrichtung zur Erfassung eines eingeprägten Messstroms als Signal für die Bestimmung des Ist-Wertes eines Isolationswiderstands ausgebildet ist.

Die Vorrichtung zur Erkennung mechanischer Einwirkungen auf elektrische Anlagen umfasst eine Erfassungseinrichtung, die mit der bereits bestehenden elektrischen Verbindung der elektrischen Anlage bzw. des Betriebsmittels gekoppelt ist, also auf Signale, die bereits auf der elektrischen Verbindungsleitung vorhanden sind, zugreifen kann.

In erfindungsgemäßer Ausgestaltung ist die Erfassungseinrichtung zur Erfassung von Signalen für die Bestimmung des Ist-Wertes eines Isolationswiderstands ausgebildet.

Die Isolationsüberwachung als Schutztechnik spielt insbesondere in ungeerdeten IT-Systemen, wie sie beispielsweise bei Photovoltaikanlagen auftreten, eine bedeutende Rolle. Dabei überwacht ein Isolationswiderstandsmessgerät ständig den Isolationszustand einer elektrischen Anlage und löst einen Alarm aus, falls der Isolationswiderstand unter einen vorgegebenen Ansprechwert sinkt. Indem die Erfassungseinrichtung den Isolationswiderstand als (abgeleiteten Signal-) Ist-Wert bestimmt, kann auf der Basis dieses zeitlichen Verlaufs des Isolationswiderstands in der Detektionseinrichtung eine mechanische Einwirkung erkannt werden. Die erfindungsgemäße Vorrichtung kann also als Isolationsüberwachungsgerät ausgebildet sein und darüber hinaus der Erkennung mechanischer Einwirkungen dienen.

Hierdurch wird mit nur geringem technischem Aufwand ohne wesentliche bauliche Eingriffe in die elektrische Anlage unter Nutzung einer existierenden elektrischen Verbindung die Erkennung mechanischer Einwirkungen ermöglicht.

Eine vorteilhafte Ausgestaltung ergibt sich durch eine Detektionseinrichtung, die durch einen Vergleich eines Ist-Wertes des erfassten Signals oder eines Ist-Wertes daraus abgeleiteter Größen mit einem Soll-Wert eine mechanische Einwirkung erkennt und ein Alarmsignal erzeugt.

Eine derartige Detektionseinrichtung erlaubt mittels Vergleich der erfassten Ist-Werte mit voreingestellten oder gespeicherten Soll-Werten eine Aussage über eine mögliche mechanische Einwirkung, da eine solche Einwirkung in der Regel mit sprunghaften Änderungen des erfassten Signals einhergeht. Weiterhin ist die Detektionseinrichtung mit Mitteln zur Erzeugung eines Alarmsignals versehen.

Bevorzugt weist die Vorrichtung eine Übertragungseinrichtung zur Fernübertragung des Alarmsignals auf. Dabei kann die Übertragungseinrichtung Komponenten zur Funkübertragung und/oder zur leitungsgebundenen Übertragung umfassen, um das Alarmsignal dezentral an verschiedenen Orten empfangen zu können. Beispielsweise kann das Alarmsignal über eine digitale Datenschnittstelle in Form eines kodierten Datenpaketes per Funk oder Kabel zu einer Leitwarte (Central Monitoring Station - CMS) gesendet werden. Diese kann sich z.B. bei dem Anlagenbetreiber, einer Objektschutzfirma oder bei der Feuerwehr befinden. Dort wird die telegrammartige elektronische Alarmmeldung datentechnisch ausgewertet und weiter verarbeitet.

Die Vorrichtung umfasst vorteilhafterweise eine Einrichtung zur permanenten Selbstüberwachung, um Manipulationen an der Vorrichtung, insbesondere ein Lahmlegen der Alarmfunktion, zu verhindern.

Typischerweise ändert sich der Isolationswiderstand mit der Zeit, z.B. bei Photovoltaikanlagen in Abhängigkeit der Umgebungsbedingungen wie Lichtstärke oder Luftfeuchtigkeit, jedoch können diese für eine bestimmte Anlage charakteristischen Änderungen von sprunghaften Änderungen, die durch einmalige mechanische Einwirkungen hervorgerufen werden, unterschieden werden. Dabei kann ein für eine bestimmte Anlage charakteristischer Verlauf zuvor "gelernt" werden und als zeitliches Referenzmuster bei dem Vergleich mit dem erfassten Ist-Wert dienen. Außergewöhnliche Abweichungen, die zuvor festgelegte Grenzwerte über- oder unterschreiten, dienen dann als Indiz für eine mechanische Einwirkung und können ein Alarmsignal auslösen.

In einem alternativen Beispiel ist die Erfassungseinrichtung zur Erfassung von Signalen für die Erkennung eines Lichtbogens ausgebildet.

In diesem Beispiel nutzt die Vorrichtung die vorhandene Betriebsspannung der elektrischen Anlage zur Erkennung einer mechanischen Einwirkung. Steht die Anlage unter Spannung und fließt ein Strom durch die Versorgungsleitung, so tritt ab einer Grenz-Stromstärke ein Lichtbogen auf, wenn die Anlage bzw. das Betriebsmittel von dem Versorgungskreis getrennt wird. Diesen Effekt kann man sich zunutze machen, um eine Trennung des zu überwachenden Anlagenteils zu detektieren. Ein der Erfassungseinrichtung zugeordneter Lichtbogensensor, der an beliebiger Stelle - idealerweise an einer für Unbefugte unzugänglichen Stelle - angebracht werden kann, identifiziert einen Lichtbogen eindeutig und löst ein Alarmsignal aus.

Mit Vorteil weist eine Photovoltaikanlage mit wenigstens einem Solarstrommodul eine erfindungsgemäße Vorrichtung auf. Die Erfindung eignet sich gleichermaßen zur Überwachung einer Photovoltaikanlage im Tag- und Nachtbetrieb. Da derartige Anlagen aus Gründen der Verfügbarkeit und der Versorgungssicherheit meist als IT-System mit Isolationsüberwachung ausgeführt sind, bietet die vorliegende Erfindung in der Ausgestaltung als Isolationsüberwachungsgerät die Möglichkeit einer kostengünstigen, vollständigen (Diebstahl-) Überwachung der wertvollen Solarstrommodule.

Auf Basis der Ermittlung und der Auswertung des zeitlichen Verlaufs des Isolationswiderstands können außergewöhnliche Ereignisse erkannt und signalisiert werden. Die Erfindung ermöglicht eine sofortige Alarmsignalerzeugung unabhängig davon, welcher Teil der Photovoltaikanlage manipuliert wurde. Es können auch weitere Komponenten der Photovoltaikanlage, die mit den Solarstrommodulen verbunden oder in diese integriert sind, wie z.B. DC/DC- oder DC/AC-Wandler, mit überwacht werden.

Weitere vorteilhafte Ausgestaltungsmerkmale ergeben sich aus der nachfolgenden Beschreibung und den Zeichnungen, die eine bevorzugte Ausführungsform der Erfindung an Hand eines Beispiels erläutern. Es zeigen:
- **Fig. 1**:: ein funktionales Blockschaltbild einer erfindungsgemäßen Vorrichtung zur Erkennung mechanischer Einwirkungen auf elektrische Anlagen,
- **Fig. 2**:: ein Blockschaltbild einer Photovoltaikanlage mit einer erfindungsgemäßen Vorrichtung.

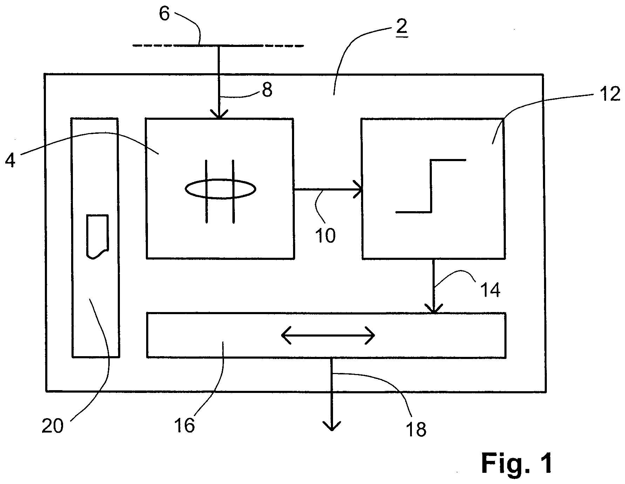

**Fig. 1** zeigt in einem funktionalen Blockschaltbild den Aufbau einer erfindungsgemäßen Vorrichtung 2. Dargestellt sind die wesentlichen Komponenten zur Ausführung eines erfindungsgemäßen Verfahrens zur Erkennung mechanischer Einwirkungen auf elektrische Anlagen. Damit dient diese Darstellung auch der Verdeutlichung des erfindungsgemäßen Verfahrensablaufs.

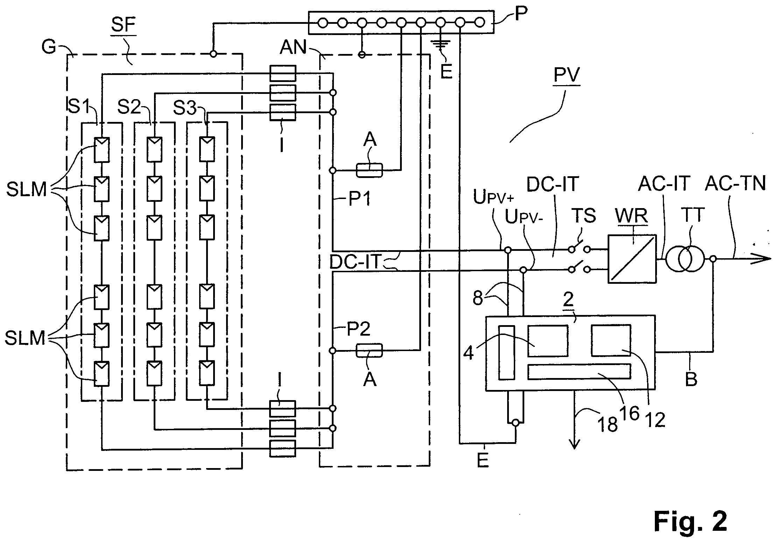

Die erfindungsgemäße Vorrichtung 2 weist eine Erfassungseinrichtung 4 auf, die mit einer funktionsgemäßen elektrischen Verbindungsleitung 6 einer elektrischen Anlage gekoppelt ist. Die Verbindungsleitung 6 kann Teil eines bestehenden Stromversorgungsnetzes (DC-IT in Fig. 2) oder die Zuleitung eines beliebigen zu überwachenden elektrischen Betriebsmittels sein. Auf dieser elektrischen Verbindung 6 nimmt die Erfassungseinrichtung 4 mindestens ein bereits vorhandenes Signal 8 auf. Das erfasste Signal 8 ist ein zusätzlich in das Leitungsnetz eingeprägter Messstrom für eine Isolationsüberwachung. Das erfasste Signal 8 oder eine daraus abgeleitete Größe wird als Ist-Wert 10 an eine Detektionseinrichtung 12 weitergeleitet. In der Detektionseinrichtung 12 wird der gemessene Ist-Wert 10 mit einem voreingestellten Soll-Wert oder mit einem gespeicherten zeitlichen Referenzmuster verglichen, um zu erkennen, ob die Abweichung noch tolerabel oder als unzulässig und somit als meldebedürftig anzusehen ist.

In Verbindung mit der Funktion der Isolationsüberwachung können die Referenzdaten Absolutwerte des Isolationswiderstands und/oder Schwellenwerte für eine maximal zulässige Änderungsgeschwindigkeit des Isolationswiderstandswertes sein.

Überschreitet die Abweichung einen zuvor festgelegten Grenz- oder Schwellenwert, erzeugt die Detektionseinrichtung 12 ein Alarmsignal 14. Dieses Alarmsignal kann optisch und/oder akustisch signalisiert und mittels einer Übertragungseinrichtung 16 ausgesendet werden. Beispielsweise kann das Alarmsignal 14 über eine als digitale Datenschnittstelle ausgeführte Übertragungseinrichtung 16 als binäres Datenpaket 18 per Funk oder Kabel an eine Leitstelle gesendet werden.

Um Manipulationen an der Vorrichtung 2 zu verhindern, besitzt diese eine Einrichtung 20 zur permanenten Selbstüberwachung.

Fig. 2 zeigt ein Blockschaltbild einer Photovoltaikanlage mit einer erfindungsgemäßen Vorrichtung 2. In dieser Konstellation beruht die Funktion der Erkennung mechanischer Einwirkungen auf der Erfassung von Signalen für die Bestimmung des Ist-Wertes des Isolationswiderstands.

Die beispielhafte Photovoltaikanlage PV weist ein Feld SF aus Solarstrommodulen SLM auf. Mit Hilfe dieser Betriebsmittel werden die Gleichspannungen U_{PV+} und U_{PV-} an einem positiven bzw. negativen Pol P1, P2 eines isolierten, nicht geerdeten Gleichspannungsnetzes DC-IT erzeugt. Das Gleichspannungsnetzes DC-IT stellt somit die funktionsgemäße elektrische Verbindung (6 in Fig. 1) dar, wobei die auf dieser Verbindungsleitung vorhandenen Gleichspannungen U_{PV+} und U_{PV-} die erfassten Signale 8 zur Erkennung mechanischer Einwirkungen ergeben.

Die Solarstrommodule SLM sind im Beispiel der Fig. 2 auf drei Stränge S1, S2, S3 mit jeweils sechs in Reihe geschalteten Solarstrommodulen SLM verteilt. Die Stränge sind parallel geschaltet und über Sicherungen I an den positiven bzw. negativen Pol P1, P2 des Gleichspannungsnetzes DC-IT angeschlossen.

Die bei einer ausreichenden Bestrahlung der Solarstrommodule erzeugten Photovoltaikgleichspannungen U_{PV+} und U_{PV-} werden über ein Trennschütz TS einem Wechselrichter WR zugeführt. Dieser erzeugt ausgangsseitig ein isoliertes, nicht geerdetes Wechselspannungsnetz AC-IT, das die Energie über einen zwischengeschalteten Trenntransformator TT schließlich in Wechselspannungsnetz AC-TN mit geerdetem Sternpunkt einspeist.

Das Feld SF der Solarstrommodule SLM ist in einem Gehäuse G untergebracht, das über eine Hauptpotentialausgleichsschiene P mit dem Erdbezugspotential E verbunden ist. Die aus dem Gehäuse G abgehenden elektrischen Kontakte der Stränge S1, S2, S3 sind über einen zusätzlichen Anschlusskasten AN einerseits direkt mit den Polen P1, P2 des Gleichspannungsnetzes DC-IT verbunden, und weiterhin durch Überspannungsableiter A an die Hauptpotentialausgleichsschiene P angeschlossen.

An diese beispielhafte Photovoltaikanlage PV ist eine gemäß der Erfindung ausgeführte Vorrichtung 2 angeschlossen. Diese wird über eine Spannungsversorgung B von dem Wechselspannungsnetz AC-TN, in welches die Photovoltaikanlage PV einspeist, mit Energie versorgt. Alternativ würde bei Anlagen in Stand-Alone-Ausführung die Spannungsversorgung B über eine Stand-Alone-Energiequelle realisiert werden. Wie im Detail in Fig. 1 dargestellt, enthält die erfindungsgemäße Vorrichtung 2 eine Erfassungseinrichtung 4 für den Ist-Wert des Isolationswiderstands im Gleichspannungsnetz DC-IT. Hierzu werden als Signale die an den Polen P1 und P2 auftretenden Istwerte der Photovoltaikgleichspannungen U_{PV+} und U_{PV-} zyklisch erfasst und in der Detektionseinrichtung 12 ausgewertet. Über die Übertragungseinrichtung 16 wird ein Alarmsignal als Datenpaket 18 über Funk oder leitungsgebunden, beispielsweise an eine Leitstelle, ausgesendet.

## Patentansprüche

1. Verfahren zur Erkennung mechanischer Einwirkungen auf elektrische Anlagen ungeerdeter IT Systeme, die eine funktionsgemäße elektrische Verbindung (6) mit einem Stromversorgungsnetz oder einem Speichermedium aufweisen, wobei zur Erkennung der mechanischen Einwirkung mindestens ein Signal (8) auf der funktionsgemäßen elektrischen Verbindung (6) erfasst wird,
**dadurch gekennzeichnet,**
**dass** zusätzlich eine Erdverbindung (E) einer zur Ausführung des Verfahrens ausgebildeten Vorrichtung (2) überwacht wird, wobei die Vorrichtung (2) eine Erfassungseinrichtung (4) aufweist, die zur Erfassung eines für die Bestimmung des Ist-Wertes eines Isolationswiderstands erforderlichen eingeprägten Messstroms als Signal (8) ausgebildet ist.

2. Verfahren nach Anspruch 1,
**dadurch gekennzeichnet,**
**dass** die Erkennung der mechanischen Einwirkung durch Vergleich eines Ist-Wertes des erfassten Signals (8) oder eines Ist-Wertes daraus abgeleiteter Größen mit einem Soll-Wert erfolgt.

3. Verfahren nach Anspruch 1 oder 2,
**dadurch gekennzeichnet,**
**dass** eine sprunghafte Änderung des Ist-Wertes als Erkennungskriterium für eine mechanische Einwirkung herangezogen wird.

4. Verfahren nach einem der Ansprüche 1 bis 3,
**dadurch gekennzeichnet,**
**dass** eine Änderungsgeschwindigkeit des Ist-Wertes als Erkennungskriterium für eine mechanische Einwirkung herangezogen wird.

5. Verfahren nach einem der Ansprüche 1 bis 4,
**dadurch gekennzeichnet,**
**dass** bei Erkennen einer mechanischen Einwirkung ein Alarmsignal (14) erzeugt wird.

6. Verfahren nach Anspruch 5,
**dadurch gekennzeichnet,**
**dass** das Alarmsignal (14) fernübertragen (18) wird.

7. Verfahren nach einem der Ansprüche 1 bis 6,
**dadurch gekennzeichnet,**
**dass** eine permanente Selbstüberwachung (20) des Verfahrens zur Erkennung mechanischer Einwirkungen ausgeführt wird.

8. Verfahren nach einem der Ansprüche 1 bis 7,
**gekennzeichnet durch**
einen getakteten Betrieb.

9. Verfahren nach einem der Ansprüche 1 bis 8,
**gekennzeichnet durch**
eine temporäre Aktivierung.

10. Vorrichtung (2) zur Erkennung mechanischer Einwirkungen auf elektrische Anlagen ungeerdeter IT Systeme die eine funktionsgemäße elektrische Verbindung (6) mit einem Stromversorgungsnetz oder einem Speichermedium aufweisen, wobei eine Erfassungseinrichtung (4) zum Erfassen mindestens eines Signals (8) auf der funktionsgemäßen elektrischen Verbindung (6) mit dieser gekoppelt ist,
**dadurch gekennzeichnet,**
**dass** die Erfassungseinrichtung (4) zur Erfassung eines eingeprägten Messstroms als Signal (8) für die Bestimmung des Ist-Wertes eines Isolationswiderstands und zur Überwachung einer Erdverbindung (E) der Vorrichtung ausgebildet ist.

11. Vorrichtung (2) nach Anspruch 10,
**gekennzeichnet durch**
eine Detektionseinrichtung (12), die durch einen Vergleich eines Ist-Wertes des erfassten Signals (8) oder eines Ist-Wertes daraus abgeleiteter Größen mit einem Soll-Wert eine mechanische Einwirkung erkennt und ein Alarmsignal (14) erzeugt.

12. Vorrichtung (2) nach Anspruch 10 oder 11,
**gekennzeichnet durch**
eine Übertragungseinrichtung (16) zur Fernübertragung (18) des Alarmsignals (14).

13. Vorrichtung (2) nach einem der Ansprüche 10 bis 12,
**gekennzeichnet durch**
eine Einrichtung (20) zur permanenten Selbstüberwachung.

14. Photovoltaikanlage (PV) mit wenigstens einem Solarstrommodul (SLM) und mit einer Vorrichtung (2) nach einem der Ansprüche 10 bis 13.

## Claims

1. A method for recognising mechanical impacts on electrical installations of unearthed IT systems which comprise a functional electrical connection (6) with a power supply network or a storage medium, at least one signal (8) being recorded on the functional electrical connection (6) in order to recognise the mechanical impact,
**characterised in that**
additionally, an earth connection (E) of a device (2) designed for carrying out the method is monitored, the device (2) having a recording unit (4) which is designed to record an impressed measuring current as a signal (8), said measuring current being required to determine the actual value of an insulation resistance.

2. Method according to claim 1,
**characterised in that**
recognition of the mechanical impact is effected by comparing an actual value of the recorded signal (8) or an actual value of variables derived therefrom with a required value.

3. Method according to claim 1 or 2,
**characterised in that**
a sharp change in the actual value is utilised as a recognition criterion for a mechanical impact.

4. Method according to one of claims 1 to 3,
**characterised in that**
a rate of change in the actual value is utilised as a recognition criterion for a mechanical impact.

5. Method according to one of claims 1 to 4,
**characterised in that**
an alarm signal (14) is generated upon recognition of a mechanical impact.

6. Method according to claim 5,
**characterised in that**
the alarm signal (14) is transmitted remotely (18).

7. Method according to one of claims 1 to 6,
**characterised in that**
permanent self-monitoring (20) of the method for recognising mechanical impacts is carried out.

8. Method according to one of claims 1 to 7,
**characterised by**
cyclical operation.

9. Method according to one of claims 1 to 8,
**characterised by**
temporary activation.

10. A device (2) for recognising mechanical impacts on electrical installations of unearthed IT systems which comprise a functional electrical connection (6) with a power supply network or a storage medium, a recording unit (4) for recording at least one signal (8) on the functional electrical connection (6) being coupled with the functional electrical connection (6),
**characterised in that**
the recording unit (4) is designed to record an impressed measuring current as a signal (8) for determining the actual value of an insulation resistance and to monitor an earth connection (E) of the device.

11. Device (2) according to claim 10,
**characterised by**
a detection unit (12) which, by comparing an actual value of the recorded signal (8) or an actual value of variables derived therefrom with a required value, recognises a mechanical impact and generates an alarm signal (14).

12. Device (2) according to claim 10 or 11,
**characterised by**
a transmission unit (16) for remote transmission (18) of the alarm signal (14).

13. Device (2) according to one claims 10 to 12,
**characterised by**
a unit (20) for permanent self-monitoring.

14. A photovoltaic installation (PV) with at least one solar current module (SLM) and with a device (2) according to one of claims 10 to 13.

## Revendications

1. Procédé d'identification d'effets mécaniques sur des installations électriques de systèmes IT sans mise à la terre qui ont une connexion (6) électrique fonctionnelle avec un réseau d'alimentation en courant ou avec un dispositif de stockage, au moins un signal (8) étant saisi sur la connexion (6) électrique fonctionnelle afin d'identifier l'effet mécanique,
**caractérisé en ce qu'**
en plus une connexion (E) à la terre d'un dispositif (2) configuré pour effectuer le procédé est surveillée, le dispositif (2) ayant une unité de saisie (4) qui est configurée pour saisir un courant de mesure appliqué formant signal (8) qui est requis pour déterminer la valeur réelle d'une résistance d'isolation

2. Procédé selon la revendication 1,
**caractérisé en ce que**
l'effet mécanique est identifié par une comparaison d'une valeur réelle du signal (8) saisi ou d'une valeur réelle de grandeurs dérivées de celle-ci avec une valeur désirée.

3. Procédé selon la revendication 1 ou 2,
**caractérisé en ce qu'**
une variation brusque de la valeur réelle est utilisée comme critère d'identification pour un effet mécanique.

4. Procédé selon l'une quelconque des revendications 1 à 3,
**caractérisé en ce qu'**
un taux de variation de la valeur réelle est utilisée comme critère d'identification pour un effet mécanique.

5. Procédé selon l'une quelconque des revendications 1 à 4,
**caractérisé en ce qu'**
un signal d'alarme (14) est généré lorsqu'un effet mécanique est identifié.

6. Procédé selon la revendication 5,
**caractérisé en ce que**
le signal d'alarme (14) est transmis à distance (18).

7. Procédé selon l'une quelconque des revendications 1 à 6,
**caractérisé en ce qu'**
une auto-surveillance (20) permanente du procédé d'identification d'effets mécaniques est effectuée.

8. Procédé selon l'une quelconque des revendications 1 à 7,
**caractérisé par**
un fonctionnement cadencé.

9. Procédé selon l'une quelconque des revendications 1 à 8,
**caractérisé par**
une activation temporaire.

10. Dispositif (2) d'identification d'effets mécaniques sur des installations électriques de systèmes IT sans mise à la terre qui ont une connexion (6) électrique fonctionnelle avec un réseau d'alimentation en courant ou avec un dispositif de stockage, une unité de saisie (4) destinée à saisir au moins un signal (8) sur la connexion (6) électrique fonctionnelle étant couplée à celle-ci,
**caractérisé en ce que**
l'unité de saisie (4) est configurée pour saisir un courant de mesure appliqué formant signal (8) pour la détermination de la valeur réelle d'une résistance d'isolation et pour surveiller une connexion (E) à la terre du dispositif.

11. Dispositif (2) selon la revendication 10,
**caractérisé par**
une unité de détection (12) qui identifie un effet mécanique en comparant une valeur réelle du signal (8) saisi ou une valeur réelle de grandeurs dérivées de celle-ci avec une valeur désirée et génère un signal d'alarme (14).

12. Dispositif (2) selon la revendication 10 ou 11,
**caractérisé par**
une unité de transmission (16) pour la transmission à distance (18) du signal d'alarme (14).

13. Dispositif (2) selon l'une quelconque des revendication 10 à 12,
**caractérisé par**
une unité (20) pour l'auto-surveillance permanente.

14. Installation photovoltaïque (PV) comprenant au moins un module de courant solaire (SLM) et comprenant un dispositif (2) selon l'une quelconque des revendications 10 à 13.
